# EUROPEAN PATENT SPECIFICATION

(11) **EP 3 806 481 B1**
(45) Date of publication and mention of the grant of the patent: **12.11.2025**
(21) Application number: 18920907.5
(22) Date of filing: 31.05.2018
(51) Int. Cl.: G08C 17/02, H04Q 9/00, F24F 11/52, H04M 11/00

(54) **EQUIPMENT MANAGEMENT DEVICE USING TOUCH PANEL, AND METHOD FOR GENERATING MANAGEMENT SCREEN**
GERÄTEVERWALTUNGSVORRICHTUNG MIT BERÜHRUNGSTAFEL UND VERFAHREN ZUR ERZEUGUNG EINES VERWALTUNGSBILDSCHIRMS
DISPOSITIF DE GESTION D'ÉQUIPEMENT À L'AIDE D'UN PANNEAU TACTILE, ET PROCÉDÉ DE GÉNÉRATION D'ÉCRAN DE GESTION

(43) Date of publication of application: 14.04.2021
(73) Proprietor: Carrier Japan Corporation, Tokyo 141-0032 (JP)
(72) Inventor: SAKURAI, Koichiro, Fuji-shi, Shizuoka 416-8521 (JP); KAWAI, Hidemitsu, Fuji-shi, Shizuoka 416-8521 (JP)
(74) Representative: Gramm, Lins & Partner Patent- und Rechtsanwälte PartGmbB
(86) International application number: PCT/JP2018/020946
(87) International publication number: WO 2019/229929

(56) References cited:
- EP-A1- 3 091 299
- EP-B1- 3 091 299
- JP-A- 2000 236 585
- JP-A- 2012 150 297
- JP-A- H1 130 437
- US-A1- 2014 319 232

## Description

### TECHNICAL FIELD

Embodiments of the present invention relate to a facility management apparatus using a touch panel and to a management-window generation method.

### BACKGROUND ART

Generally, a working condition of an air conditioner is controlled by a user using a remote controller that is communicably connected. In such a remote controller of an air conditioner, control buttons for controlling a working condition concerning each function of the air conditioner and a display unit for displaying a working condition or the like concerning each function are provided separately from each other. When a user operates a control button of the remote controller, the user visually perceives a change in displayed information displayed on the display unit, about a working condition concerning a corresponding function, thereby recognizing that his operation has been normally accepted.

### CITATION LIST

### PATENT LITERATURE

EP 3 091 299 A1 discloses the features of the preamble of the independent claims. Further prior art is disclosed in US 2014/319 232 A1 and JP No. 5646797 B2

### SUMMARY OF INVENTION

In recent years, in a remote controller for controlling a working condition of an air conditioner, a capacitive touch panel or the like is used in many cases. In such a remote controller using a touch panel, for some functions, positions of pieces of displayed information indicating working conditions are set as control buttons for the functions. In this case, a user can easily change a working condition concerning each of the functions by a touch operation on a position where the working condition is displayed on the touch panel.

However, in a case where displayed information about a working condition concerning a predetermined function and a control button for the predetermined function are set in the same position, the displayed information is hidden with a user's finger during a touch operation. Thus, the user cannot visually perceive a change that has been made in the displayed information by his operation. Being unable to visually perceive a change in displayed information makes a user uncertain about whether his operation has been normally accepted in some cases.

In this connection, one possible solution is to increase the size of displayed information about a working condition to such a degree that a part of the displayed information extends off a user's finger during a touch operation. This solution may allow the user to recognize a change in displayed information, but cannot ensure it. Further, because of a limitation to the size of a touch panel, it is difficult to enormously increase the size of displayed information about all functions.

The invention has been made in view of the above-described situations, it is an object to provide a facility management apparatus and a management-window generation method that allow a user to visually perceive a change that is made in a working condition of the facility equipment by his operation on a touch panel in controlling the working condition and to quickly and easily change the intended working conditions.

The invention is defined by the features of the independent claims. Preferred, but not mandatory features, are laid out in the dependent claims. To attain the above-described object, a remote controller of an air conditioner according to embodiments includes a displayed-information generation unit, a touch panel, an operation determination unit, and a working-control information generation unit. The displayed-information generation unit generates displayed information in which a first area that displays graphic information indicating a current working condition of facility equipment and a second area that displays text information indicating the working condition, are arranged and displayed. Then, when an operation of changing the working condition is performed, the displayed-information generation unit changes the graphic information and the text information based on a post-change working condition. The touch panel displays the generated displayed information. When an operation is performed on any position in the first area or the second area that are displayed, the touch panel inputs operation information corresponding to the operation. The operation determination unit determines an operation based on the input operation information. The working-control information generation unit generates working-control information for changing a working condition of the facility equipment based on the determined operation.

### BRIEF DESCRIPTION OF DRAWINGS

Fig. 1 is an overall view illustrating an air conditioning system using a tablet terminal serving as a facility management apparatus according to an embodiment of the present invention.
Fig. 2 is a block diagram illustrating a configuration of the tablet terminal serving as the facility management apparatus according to the embodiment of the present invention.
Fig. 3 illustrates an example of a general air-conditioner management window displayed on the tablet terminal serving as the facility management apparatus according to the embodiment of the present invention.
Fig. 4 illustrates an example of a horizontally-long individual air-conditioner management window displayed on the tablet terminal serving as the facility management apparatus according to the embodiment of the present invention.
Fig. 5 is a transition diagram of displayed information in a position of air-volume change button information in the individual air-conditioner management window displayed on the tablet terminal serving as the facility management apparatus according to the embodiment of the present invention.
Fig. 6 is a transition diagram of displayed information in a position of wind-direction change button information in the individual air-conditioner management window displayed on the tablet terminal serving as the facility management apparatus according to the embodiment of the present invention.
Fig. 7 illustrates an example of a vertically-long individual air-conditioner management window displayed on the tablet terminal serving as the facility management apparatus according to the embodiment of the present invention.

### DESCRIPTION OF EMBODIMENTS

### <Configuration of an air conditioning system using a facility management apparatus according to an embodiment>

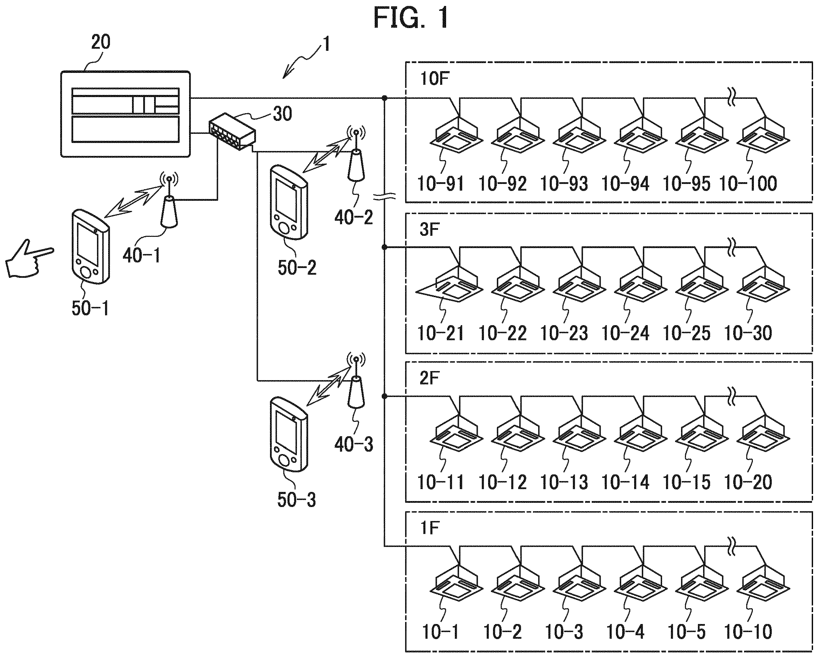

As an embodiment of the present invention, a configuration of an air conditioning system using a tablet terminal will be described with reference to Fig. 1. An air conditioning system 1 according to the present embodiment includes a plurality of air conditioners (indoor units) 10-1 to 10-100 that are installed in a 10-floor building and are objects being managed, a controller 20 that is connected to the air conditioners 10-1 to 10-100 and serves as a central management apparatus, access points 40-1 to 40-3 for wireless communication that are connected to the controller 20 via a hub 30, a tablet terminal 50-1 that is wirelessly connected to the access point 40-1, a tablet terminal 50-2 that is wirelessly connected to the access point 40-2, and a tablet terminal 50-3 that is wirelessly connected to the access point 40-3. The tablet terminals 50-1 to 50-3 are operated by a manager of the air conditioning system 1. Additionally, only a single tablet terminal may be provided for use in the air conditioning system 1.

A store A occupies the first floor of the building and the air conditioners 10-1 to 10-10 are installed in the store A. Further, a store B occupies the second floor and the air conditioners 10-11 to 10-20 are installed in the store B. Similarly, stores C to J occupy the third to tenth floors, respectively, and the air conditioners 10-21 to 10-30, ..., and 10-91 to 10-100 are installed in the stores, respectively.

Each of the air conditioners 10-1 to 10-100 has a cooling function, a heating function, a ventilation function, and a dehumidifying function. Alternatively, the air conditioner has only a cooling function and a ventilation function in some cases. Further, each of the air conditioners 10-1 to 10-100 is configured such that a wind direction of air blow can be changed in five steps and an air volume of air blow can be changed in five steps during working for each of the above-described functions.

In the air conditioning system 1, the plurality of air conditioners 10-1 to 10-100 installed in the building correspond to facility equipment and the tablet terminals 50-1 to 50-3 correspond to facility management apparatuses.

Hereinafter, the air conditioners 10-1 to 10-100 will be referred to as an "air conditioner 10" unless identification of any of them is necessary. Similarly, the tablet terminals 50-1 to 50-3 will be referred to as a "tablet terminal 50" unless identification of any of them is necessary. Further similarly, the access points 40-1 to 40-3 will be referred to as an "access point 40" unless identification of any of them is necessary.

The controller 20 communicates with the air conditioners 10-1 to 10-100, to transmit working-control information for controlling working of the air conditioners 10-1 to 10-100 as needed and acquire working-condition information about the air conditioners 10-1 to 10-100 at predetermined time intervals.

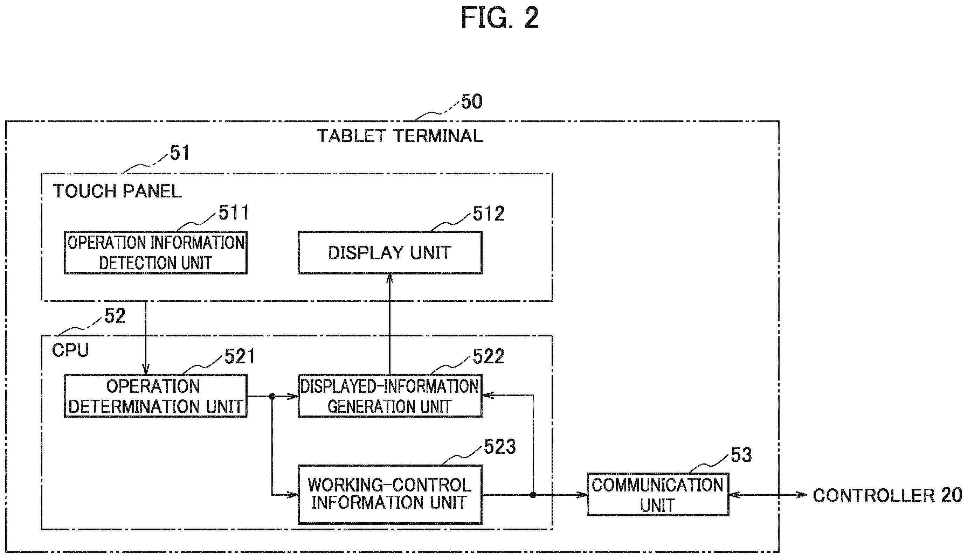

Each of the tablet terminals 50 includes a touch panel 51, a CPU 52, and a communication unit 53 as illustrated in Fig. 2. The touch panel 51 includes an operation-information detection unit 511 and a display unit 512. The operation-information detection unit 511 detects an operation achieved by a touch of a manager's finger or the like on the touch panel 51. The display unit 512 displays a management window generated for each of the air conditioners 10-1 to 10-100 by a displayed-information generation unit 522 that will be described later.

The CPU 52 includes an operation determination unit 521, the displayed-information generation unit 522, and a working-control information generation unit 523. The operation determination unit 521 determines an operation performed by a manager, based on operation information detected by the operation-information detection unit 511 and displayed information displayed on the display unit 512. Examples of an operation include an operation of designating an air conditioner as an object being managed, an operation of changing a working condition of the designated air conditioner, and the like. The displayed-information generation unit 522 generates displayed information that is to be displayed on the display unit 512, based on an operation determined by the operation determination unit 521. The working-control information generation unit 523 generates working-control information about the air conditioner 10 being controlled, based on an operation determined by the operation determination unit 521. The communication unit 53 communicates with the controller 20 via the access point 40.

### <Operations of an air conditioning system using a facility management apparatus according to the embodiment>

Next, operations of the air conditioning system 1 according to the embodiment will be described. In the air conditioning system 1, the controller 20 acquires working-condition information about the air conditioners 10-1 to 10-100 at predetermined time intervals and holds them.

In order for a manager to manage the air conditioners 10-1 to 10-100 using the tablet terminal 50, the displayed-information generation unit 522 acquires the most recent working-condition information about the air conditioners 10-1 to 10-100 from the controller 20 and generates displayed information for a general air-conditioner management window 60 using the acquired information.

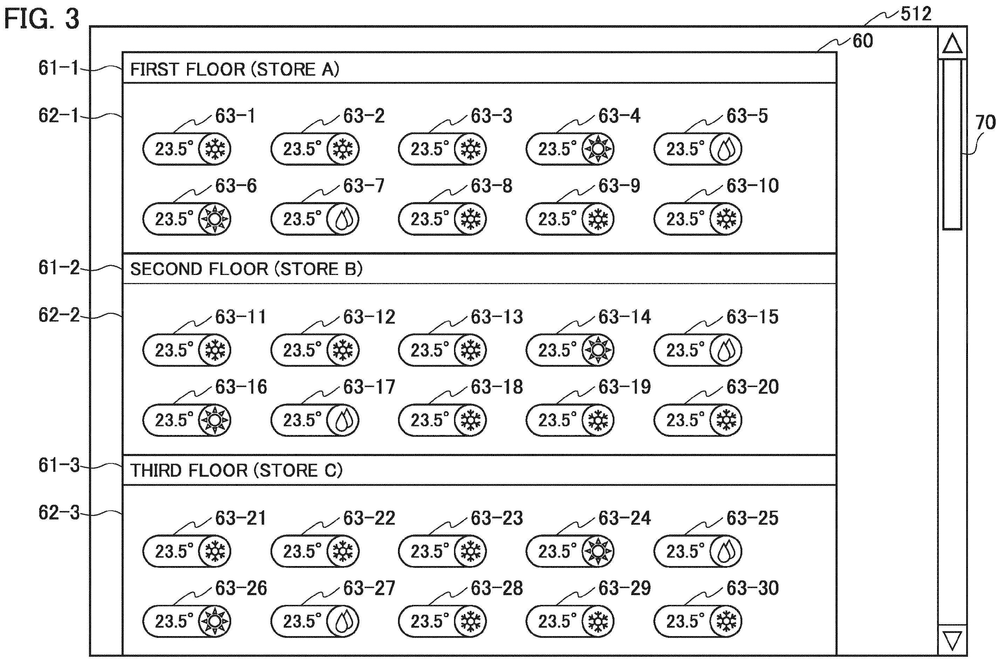

The general air-conditioner management window 60 includes area displaying sections 61-1 to 61-10 and air-conditioner icon displaying sections 62-1 to 62-10 that correspond to the first floor (the store A) to the tenth floor (the store J), respectively, as illustrated in Fig. 3. In the area displaying section 61-1 corresponding to the first floor, text information "FIRST FLOOR (STORE A)" is provided. In the air-conditioner icon displaying section 62-1, air-conditioner icons 63-1 to 63-10 respectively corresponding to the air conditioners 10-1 to 10-10 installed on the first floor are provided. Further, in the area displaying section 61-2 corresponding to the second floor, text information "SECOND FLOOR (STORE B)" is provided. In the air-conditioner icon displaying section 62-2, air-conditioner icons 63-11 to 63-20 respectively corresponding to the air conditioners 10-11 to 10-20 installed on the second floor are provided. In the same manner, in the area displaying sections 61-3 to 61-10 corresponding to the third to tenth floors, pieces of text information "THIRD FLOOR (STORE C)" to "TENTH FLOOR (STORE J)" are provided, respectively. In the air-conditioner icon displaying sections 62-3 to 62-10, air-conditioner icons 63-21 to 63-30 ..., and 63-91 to 63-100 corresponding to the air conditioners 10-21 to 10-30 ..., and 10-91 to 10-100 are provided, respectively.

Each of the air-conditioner icons 63-1 to 63-100 functions as a control switch for controlling ON/OFF of its corresponding one of the air conditioners 10-1 to 10-100. Meanwhile, displayed information in the area displaying sections and the air-conditioner icon displaying sections are changed if appropriate, depending on the number of floors of a building being managed or the number of installed air conditioners.

The generated displayed information for the general air-conditioner management window 60 is sent to the display unit 512 of the touch panel 51 and is displayed thereon. It is additionally noted that in Fig. 3, only pieces of information corresponding to the first to third floors are displayed in the general air-conditioner management window 60 because of a space on the display unit 512 not enough to display all pieces of information in the general air-conditioner management window 60. A viewing area in the general air-conditioner management window 60 is moved by an operation on a scroll bar 70 at the right edge of the window, so that pieces of information about the floors that are currently not displayed are displayed.

Though the present embodiment describes a case where an air-conditioner icon is in one-to-one correspondence with an air conditioner, the invention is not limited to that. One air-conditioner icon can correspond to a plurality of air conditioners. In a case where one air-conditioner icon corresponds to a plurality of air conditioners, an operation on the one air-conditioner icon can control working of the corresponding plurality of air conditioners at a time.

In the general air-conditioner management window 60 displayed in the above-described manner, when a manager performs a predetermined operation (double-tap, for example) on any of the air-conditioner icons, for example, on the air-conditioner icon 63-11, an individual air-conditioner management window 80A for minutely controlling a working condition of the corresponding air conditioner 10-11 is generated by the displayed-information generation unit 522 and is displayed on the display unit 512.

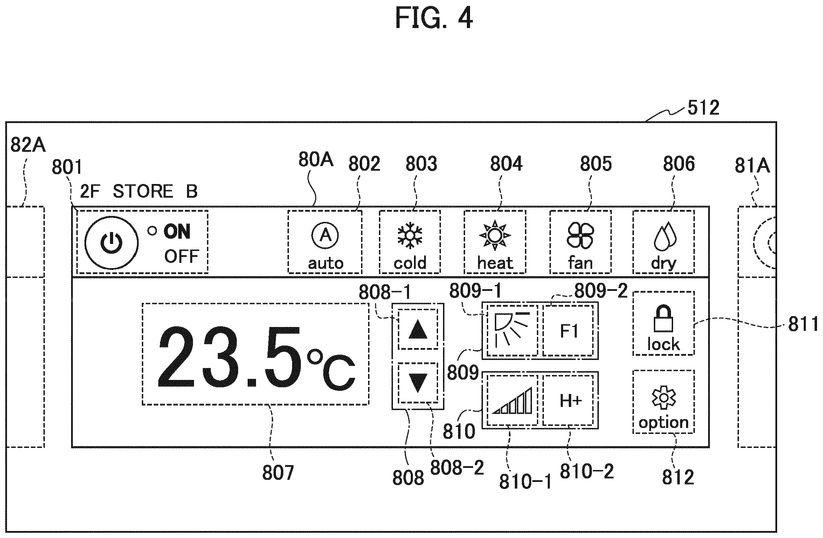

Fig. 4 illustrates an example of the individual air-conditioner management window 80A displayed on the display unit 512. The individual air-conditioner management window 80A in Fig. 4 is formed so as to be horizontally long. In the window, there are displayed power button information 801, automatic-working-mode button information 802, cooling-mode button information 803, heating-mode button information 804, ventilation-mode button information 805, dehumidifying-mode button information 806, set-temperature information 807, set-temperature change button information 808, wind-direction change button information 809, air-volume change button information 810, lock button information 811, and option button information 812.

The power button information 801 is formed of graphic information indicating a current state of power, ON or OFF, of the corresponding air conditioner 10-11 and text information "ON" and "OFF". The graphic information and the text information "ON" are lighted during an ON state of power, and only the text information "OFF" is lighted during an OFF state of power. The automatic-working-mode button information 802 is formed of graphic information indicating an automatic-working mode and text information "Auto". The graphic information and the text information are lighted during working in an automatic-working mode. The cooling-mode button information 803 is formed of graphic information indicating a cooling mode and text information "cold". The graphic information and the text information are lighted during working in a cooling mode. The heating-mode button information 804 is formed of graphic information indicating a heating mode and text information "heat". The graphic information and the text information are lighted during working in a heating mode. The ventilation-mode button information 805 is formed of graphic information indicating a ventilation mode and text information "fan". The graphic information and the text information are lighted during working in a ventilation mode. The dehumidifying-mode button information 806 is formed of graphic information indicating a dehumidifying mode and text information "dry". The graphic information and the text information are lighted during working in a dehumidifying mode.

The set-temperature information 807 is formed of text information "23.5°C" indicating a current set temperature of the corresponding air conditioner 10-11. The set-temperature change button information 808 is formed of graphic information 808-1 of an upward arrow for increasing a set temperature of the corresponding air conditioner 10 by predetermined degrees and graphic information 808-2 of a downward arrow for reducing the set temperature by predetermined degrees.

The wind-direction change button information 809 is formed of a first wind-direction area 809-1 that displays graphic information indicating a current wind direction and a second wind-direction area 809-2 that displays text information "F1" indicating a current wind direction. The first and second wind-direction areas 809-1 and 809-2 are arranged in lateral direction. Each of the first wind-direction area 809-1 and the second wind-direction area 809-2 has a lateral width substantially equal to the width of a human forefinger. It is preferable that the lateral width of a human forefinger is larger than the diameter of a typical adult's finger (12 mm) compliant with IEC 61032 standard, for example. Because of this width, when a manager touches one of the first wind-direction area 809-1 and the second wind-direction area 809-2, the manager can visually perceive displayed information in the other area. However, in a case where there is a limitation to the size of a window, the width of the area is set to 12 mm exactly equal to the diameter of a finger.

The air-volume change button information 810 is formed of a first air-volume area 810-1 that displays graphic information indicating a current air volume and a second air-volume area 810-2 that displays text information "H+" indicating a current air volume. The first and second air-volume areas 810-1 and 810-2 are arranged in lateral direction. Each of the first air-volume area 810-1 and the second air-volume area 810-2, like the first wind-direction area 809-1 and the second wind-direction area 809-2 described above, has a lateral width substantially equal to the width of a human forefinger. Additionally, the first air-volume area 810-1 and the second air-volume area 810-2 do not need to be in complete contact with each other, and may be arranged close to each other with a small clearance there between as illustrated in Fig. 4.

The lock button information 811 is formed of graphic information indicating an operation of setting an air conditioner to a state in which no operation on all pieces of the above-described button information (801 to 810) is accepted, and text information "lock". The option button information 812 is formed of graphic information indicating an operation of activating an optional function of the corresponding air conditioner 10 and text information "option".

When a manager performs a touch operation on any of positions of the pieces of the button information on the individual air-conditioner management window 80A in which the above-described pieces of information are being displayed, its corresponding operation information is detected by the operation-information detection unit 511. Then, the operation determination unit 521 determines the operation performed by the manager, based on the operation information detected by the operation-information detection unit 511 and displayed information displayed on the display unit 512. **In** other words, it is determined which of buttons has been operated. After the operation determination unit 521 determines the operation, the working-control information generation unit 523 generates working-control information for changing a working condition of the air conditioner 10-11 being controlled, based on the determined operation. The generated working-control information is transmitted to the corresponding air conditioner 10-11 via the communication unit 53 and the controller 20, and the working condition is changed.

Further, when the operation determination unit 521 determines an operation, its corresponding button information in the individual air-conditioner management window 80A is changed in accordance with the determined operation by the displayed-information generation unit 522. For example, when any of pieces of the power button information 801 to the dehumidifying-mode button information 806 on the individual air-conditioner management window 80A is operated, the button information having been operated is lighted by the displayed-information generation unit 522.

Moreover, when either the lock button information 811 or the option button information 812 on the individual air-conditioner management window 80A is operated, the displayed-information generation unit 522 displays a pop-up window for providing more detailed settings. Then, the operation determination unit 521 determines an operation performed on the pop-up window, so that the working-control information generation unit 523 generates working-control information. Thus, a working condition of a corresponding air conditioner is changed.

On the right side and the left side of the individual air-conditioner management window 80A, there are respectively displayed small parts of individual air-conditioner management windows for air-conditioner numbers before and after the air conditioner 10-11 that is currently displayed. In Fig. 4, an individual air-conditioner management window 82A on the left side is an end portion of the individual air-conditioner management window for the air conditioner 10-10, and an individual air-conditioner management window 81A on the right side is an end portion of the individual air-conditioner management window for the air conditioner 10-12. When a manager performs a rightward flick operation on the touch panel 51 on which the above-described information about the windows is displayed, the individual air-conditioner management window 82A for the air conditioner 10-10 on the left side can be caused to move to the center. In the same manner, when a manager operates a leftward flick operation on the touch panel 51, the individual air-conditioner management window 81A for the air conditioner 10-12 on the right side can be caused to move to the center.

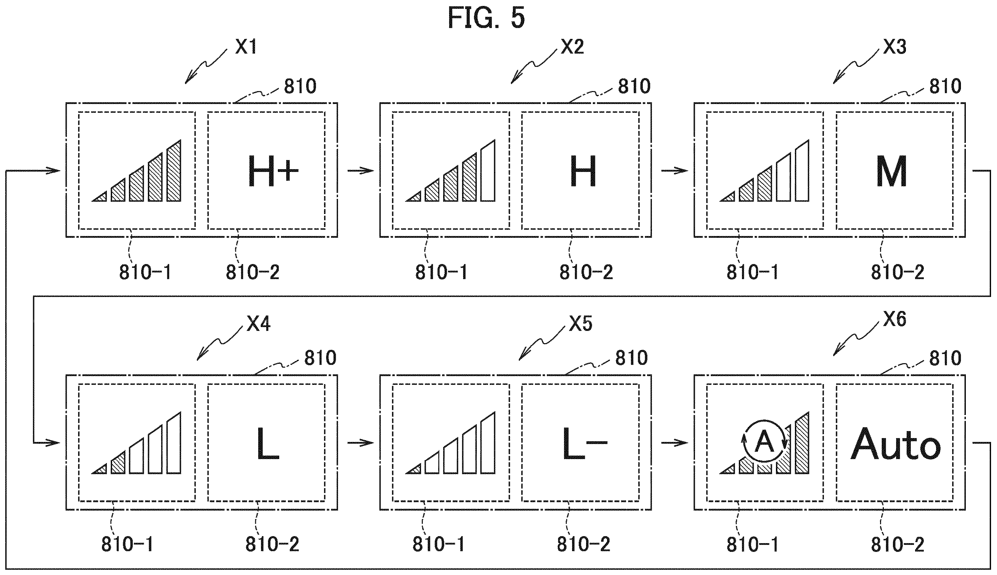

Here, there will be described processes performed when the air-volume change button information 810 on the individual air-conditioner management window 80A is operated while the air conditioner 10-11 is working with the maximum air volume. In the following description, five levels of air volumes that can be set during working of the air conditioner 10 will be described as a first air volume (High+), a second air volume (High), a third air volume (Middle), a fourth air volume (Low), and a fifth air volume (Low-) in a descending order of air volume from the maximum to the minimum. In the present embodiment, in the working-control information generation unit 523, there is established a criterion of generation of air-volume control information for cyclically changing an air volume so that the air volume of the corresponding air conditioner 10 is reduced in steps every time an air-volume changing operation is performed, an air-volume changing operation during working with the minimum air volume (the fifth air volume) causes a transition to an automatic air-volume working mode(Auto) in which an air volume is automatically adjusted, and an air-volume changing operation during an automatic air-volume working mode causes the air volume to return to the maximum air volume (the first air volume). Fig. 5 illustrates transitions of displayed information that is changed every time an air-volume changing operation is performed, in the air-volume change button information 810 in the individual air-conditioner management window 80A.

First, consider a case where the air conditioner 10-11 is currently working with the first air volume (High+) that is the maximum air volume. In this case, as illustrated in a portion denoted by X1 in Fig. 5, graphic information indicating the first air volume (High+) is displayed at the first air-volume area 810-1 of the air-volume change button information 810 in the individual air-conditioner management window 80A, and text information "H+" indicating the first air volume (High+) is displayed at the second air-volume area 810-2.

Then, when a touch operation is performed on any position in either the first air-volume area 810-1 or the second air-volume area 810-2 of the air-volume change button information 810, its corresponding operation information is detected by the operation-information detection unit 511. Thereafter, the operation determination unit 521 determines that an air-volume changing operation has been performed, based on the operation information detected by the operation-information detection unit 511 and displayed information displayed on the display unit 512.

When it is determined that an air-volume changing operation has been performed, the working-control information generation unit 523 generates air-volume control information that is a kind of working-control information for changing the air volume of the air conditioner 10-11 being controlled, in accordance with the above-described criterion of generation. In this case, there is generated air-volume control information for changing an air volume from the first air volume (High+) currently set in the air conditioner 10-11 to the second air volume (High) that is lower in level by one. The generated air-volume control information is transmitted to the corresponding air conditioner 10-11 via the communication unit 53 and the controller 20. The air conditioner 10-11, in which the air volume having been set is then changed to the second air volume (High), keeps working.

Further, when the operation determination unit 521 determines that an air-volume changing operation has been performed, the displayed-information generation unit 522 changes displayed information in the air-volume change button information 810 in the individual air-conditioner management window 80A as illustrated in a portion denoted by X2. More specifically, displayed information at the first air-volume area 810-1 is changed to graphic information indicating the second air volume (High), and displayed information at the second air-volume area 810-2 is changed to text information "H" indicating the second air volume (High).

In the same manner, when a touch operation is performed on any position in either the first air-volume area 810-1 or the second air-volume area 810-2 while the air conditioner 10-11 is working with the second air volume (High), the air volume of the air conditioner 10-11 is changed to the third air volume (Middle) based on control information generated by the working-control information generation unit 523. Further, the displayed-information generation unit 522 changes displayed information at the first air-volume area 810-1 and the second air-volume area 810-2 to information indicating the third air volume (Middle) as illustrated in a portion denoted by X3.

Further, when a touch operation is performed on any position in either the first air-volume area 810-1 or the second air-volume area 810-2 while the air conditioner 10-11 is working with the third air volume (Middle), the air volume of the air conditioner 10-11 is changed to the fourth air volume (Low) based on control information generated by the working-control information generation unit 523. Moreover, the displayed-information generation unit 522 changes displayed information at the first air-volume area 810-1 and the second air-volume area 810-2 to information indicating the fourth air volume (Low) as illustrated in a portion denoted by X4.

Further, when a touch operation is performed on any position in either the first air-volume area 810-1 or the second air-volume area 810-2 while the air conditioner 10-11 is working with the fourth air volume (Low), the air volume of the air conditioner 10-11 is changed to the fifth air volume (Low-) based on control information generated by the working-control information generation unit 523. Moreover, the displayed-information generation unit 522 changes displayed information at the first air-volume area 810-1 and the second air-volume area 810-2 to information indicating the fifth air volume (Low-) as illustrated in a portion denoted by X5.

Further, when a touch operation is performed on any position in either the first air-volume area 810-1 or the second air-volume area 810-2 while the air conditioner 10-11 is working with the fifth air volume (Low-), the air conditioner 10 is put in an automatic air-volume working mode (Auto) based on control information generated by the working-control information generation unit 523. Moreover, the displayed-information generation unit 522 changes displayed information at the first air-volume area 810-1 and the second air-volume area 810-2 to information indicating an automatic air-volume working mode (Auto) as illustrated in a portion denoted by X6.

Further, when a touch operation is performed on any position in either the first air-volume area 810-1 or the second air-volume area 810-2 while the air conditioner 10-11 is working in an automatic air-volume working mode, the air volume of the air conditioner 10 is changed to the first air volume (High+) based on control information generated by the working-control information generation unit 523. Moreover, the displayed-information generation unit 522 changes displayed information at the first air-volume area 810-1 and the second air-volume area 810-2 to information indicating the first air volume (High+) as illustrated in the portion denoted by X1.

Additionally, when a touch operation is performed on any position in either the first air-volume area 810-1 or the second air-volume area 810-2 plural times in a predetermined time (0.5 seconds, for example), the operation determination unit 521 determines an operation repeatedly. Then, the working-control information generation unit 523 determines a post-change air volume in accordance with the number of touch operations in the predetermined time and transmits air-volume control information for changing an air volume to the determined air volume, to the corresponding air conditioner 10. For example, in a case where a touch operation is performed on any position in either the first air-volume area 810-1 or the second air-volume area 810-2 three times at extremely short time intervals while the air conditioner 10 is working with the first air volume (High+), the working-control information generation unit 523 determines that a post-change air volume is the fourth air volume (Low), and transmits air-volume control information for changing an air volume to the fourth air volume (Low), to the air conditioner 10.

Meanwhile, when the operation determination unit 521 determines an operation repeatedly, in other words, every time a touch operation is performed, the displayed-information generation unit 522 changes displayed information at the first air-volume area 810-1 and the second air-volume area 810-2 sequentially from information indicating the first air volume (High+) to information indicating the second air volume (High), to information indicating the third air volume (Middle), and to information indicating the fourth air volume (Low) in the stated order.

As described above, in a case where an operation is repeated in a short time, a process of generating and outputting control information in the working-control information generation unit 523 and a process of changing displayed information in the displayed-information generation unit 522 are performed at different times based on an operation determined by the operation determination unit 521. Additionally, if an increase of an amount of communicated data in the air conditioning system 1 is allowed, control information may be generated and transmitted every time a touch operation is performed, in the same manner as displayed information is changed.

Moreover, also when an operation is performed on any position in either the first wind-direction area 809-1 or the second wind-direction area 809-2 forming the wind-direction change button information 809 on the individual air-conditioner management window 80A, the wind direction of the corresponding air conditioner 10-11 is changed in steps and displayed information at the first wind-direction area 809-1 and the second wind-direction area 809-2 is changed every time an operation is performed.

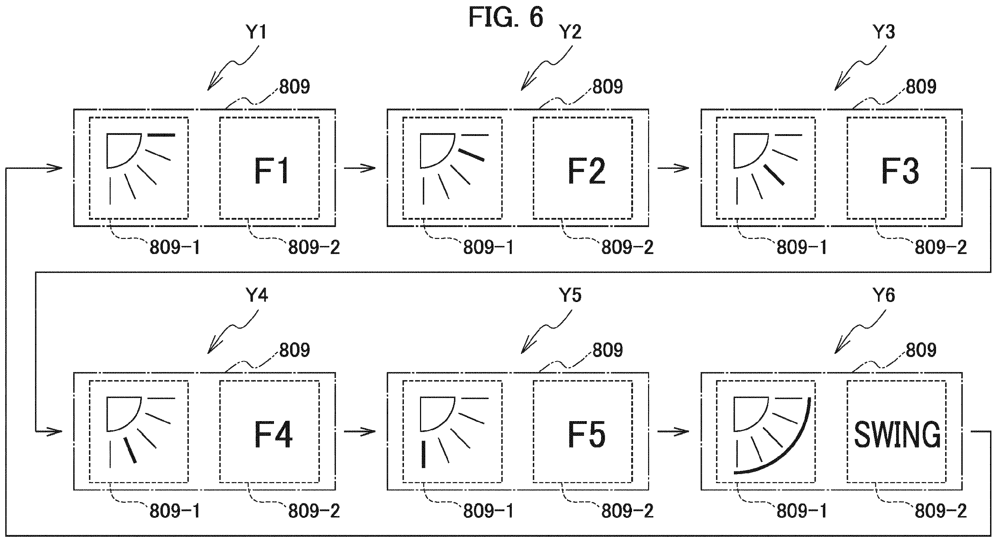

There will be described processes performed when the wind-direction change button information 809 on the individual air-conditioner management window 80A is operated while the air conditioner 10-11 is working with its wind direction being set to the most upward direction. In the following description, five levels of wind directions that can be set during working of the air conditioner 10 will be described as a first direction (F1), a second direction (F2), a third direction (F3), a fourth direction (F4), and a fifth direction (F5) in an order from the most upward direction to the most downward direction. In the present embodiment, in the working-control information generation unit 523, there is established a criterion of generation of wind-direction control information for cyclically changing a wind direction so that the wind direction of the corresponding air conditioner 10 is changed to a more downward direction in steps every time a wind-direction changing operation is performed, a wind-direction changing operation during working with the wind direction being set to the most downward direction (the fifth direction) causes a transition to a swinging mode (SWING) in which a wind is caused to flow back and forth between the first direction and the fifth direction, and a wind-direction changing operation during a swinging mode causes the wind direction to return to the first direction (F1). Fig. 6 illustrates transitions of displayed information that is changed every time a wind-direction changing operation is performed, in the wind-direction change button information 809 in the individual air-conditioner management window 80A.

First, consider a case where the air conditioner 10-11 is currently working with its wind direction being set to the first direction (F1) that is the most upward direction. In this case, as illustrated in a portion denoted by Y1 in Fig. 6, graphic information indicating the first direction is displayed at the first wind-direction area 809-1 of the wind-direction change button information 809 in the individual air-conditioner management window 80A, and text information "F1" indicating the first direction is displayed at the second wind-direction area 809-2.

Then, when a touch operation is performed on any position in either the first wind-direction area 809-1 or the second wind-direction area 809-2 forming the wind-direction change button information 809, its corresponding operation information is detected by the operation-information detection unit 511. Thereafter, the operation determination unit 521 determines that a wind-direction changing operation has been performed, based on the operation information detected by the operation-information detection unit 511 and displayed information displayed on the display unit 512.

When it is determined that a wind-direction changing operation has been performed, the working-control information generation unit 523 generates wind-direction control information that is a kind of working-control information for changing the wind direction of the air conditioner 10-11 being controlled, in accordance with the above-described criterion of generation. In this case, there is generated wind-direction control information for changing a wind direction from the first direction (F1) currently set in the air conditioner 10-11 to the second direction (F2) that is more downward in level by one. The generated wind-direction control information is transmitted to the corresponding air conditioner 10-11 via the communication unit 53 and the controller 20. The air conditioner 10-11, in which the wind direction having been set is then changed to the second direction (F2), keeps working.

Further, when the operation determination unit 521 determines that a wind-direction changing operation has been performed, the displayed-information generation unit 522 changes displayed information in the wind-direction change button information 809 in the individual air-conditioner management window 80A as illustrated in a portion denoted by Y2. More specifically, displayed information at the first wind-direction area 809-1 is changed to graphic information indicating the second direction, and displayed information at the second wind-direction area 809-2 is changed to text information "F2" indicating the second direction.

In the same manner, when a touch operation is performed on any position in either the first wind-direction area 809-1 or the second wind-direction area 809-2 while the air conditioner 10-11 is working with its wind direction being set to the second direction (F2), the wind direction of the air conditioner 10-11 is changed to the third direction (F3). Moreover, displayed information at the first wind-direction area 809-1 and the second wind-direction area 809-2 in the individual air-conditioner management window 80A is changed to information indicating the third direction (F3) as illustrated in a portion denoted by Y3.

Further, when a touch operation is performed on any position in either the first wind-direction area 809-1 or the second wind-direction area 809-2 while the air conditioner 10-11 is working with its wind direction being set to the third direction (F3), the wind direction of the air conditioner 10-11 is changed to the fourth direction (F4). Moreover, displayed information at the first wind-direction area 809-1 and the second wind-direction area 809-2 in the individual air-conditioner management window 80A is changed to information indicating the fourth direction (F4) as illustrated in a portion denoted by Y4.

Further, when a touch operation is performed on any position in either the first wind-direction area 809-1 or the second wind-direction area 809-2 while the air conditioner 10-11 is working with its wind direction being set to the fourth direction (F4), the wind direction of the air conditioner 10-11 is changed to the fifth direction (F5). Moreover, displayed information at the first wind-direction area 809-1 and the second wind-direction area 809-2 in the individual air-conditioner management window 80A is changed to information indicating the fifth direction (F5) as illustrated in a portion denoted by Y5.

Further, when a touch operation is performed on any position in either the first wind-direction area 809-1 or the second wind-direction area 809-2 while the air conditioner 10-11 is working with its wind direction being set to the fifth direction (F5), the air conditioner 10 is put in a swinging mode (SWING). Moreover, displayed information at the first wind-direction area 809-1 and the second wind-direction area 809-2 in the individual air-conditioner management window 80A is changed to information indicating a swinging mode (SWING) as illustrated in a portion denoted by Y6.

Further, when a touch operation is performed on any position in either the first wind-direction area 809-1 or the second wind-direction area 809-2 while the air conditioner 10-11 is working in a swinging mode, the wind direction of the air conditioner 10 is changed to the first direction (F1). Moreover, displayed information at the first wind-direction area 809-1 and the second wind-direction area 809-2 in the individual air-conditioner management window 80A is changed to information indicating the first direction (F1) as illustrated in the portion denoted by Y1.

Additionally, when a touch operation is performed on any position in either the first wind-direction area 809-1 or the second wind-direction area 809-2 plural times in a predetermined time (0.5 seconds, for example), the operation determination unit 521 determines an operation repeatedly. Then, the working-control information generation unit 523 determines a post-change wind direction in accordance with the number of touch operations in the predetermined time and transmits wind-direction control information for changing a wind direction to the determined wind direction, to the corresponding air conditioner 10. For example, in a case where a touch operation is performed on any position in either the first wind-direction area 809-1 or the second wind-direction area 809-2 three times at extremely short time intervals while the air conditioner 10 is working with its wind direction being set to the first direction (F1), the working-control information generation unit 523 determines that a post-change wind direction is the fourth direction (F4), and wind-direction control information for changing a wind direction to the fourth direction (F4) is transmitted to the air conditioner 10.

At that time, when the operation determination unit 521 determines an operation repeatedly, in other words, every time a touch operation is performed, the displayed-information generation unit 522 changes displayed information at the first wind-direction area 809-1 and the second wind-direction area 809-2 sequentially from information indicating the first direction (F1) to information indicating the second direction (F2), to information indicating the third direction (F3), and to information indicating the fourth direction (F4) in the stated order.

As described above, when a touch operation is performed on any position in the air-volume change button information 810 and the wind-direction change button information 809, pieces of displayed information in both of a displaying area for text information and a displaying area for graphic information are changed. Thus, if a manager performs a touch operation on a displaying area for graphic information to hide the graphic information displayed in the area with his finger, the manager can visually perceive a change in text information because the displayed text information is not hidden. On the other hand, if a manager performs a touch operation on a displaying area for text information to hide the information displayed in the area with his finger, the manager can visually perceive a change in graphic information because the displayed graphic information is not hidden. By such visual perception of the change, the manager can recognize that an operation of changing an air volume or a wind direction has been normally accepted. **In** the meantime, text information is literal information and is information including alphabets, Arabic numerals, Hiragana characters, Katakana characters, and any of combinations thereof.

On the other hand, each of the power button information 801 to the dehumidifying-mode button information 806 is switched between lighting and extinction upon an operation on the button information. Further, in each of the lock button information 811 and the option button information 812, a pop-up window is displayed upon an operation on the button information. Thus, a user can visually perceive a change in a working condition even during a touch operation. For this reason, each of the above-described pieces of button information is formed of a single area. This allows those pieces of button information to be efficiently displayed in a limited displaying area of the display unit 512.

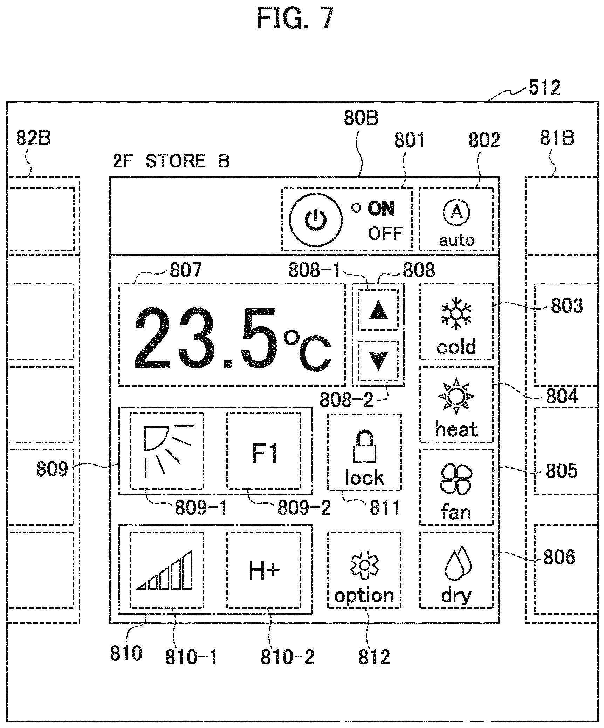

Furthermore, Fig. 7 illustrates an example of display in an individual air-conditioner management window 80B according to another embodiment. In the individual air-conditioner management window 80B in Fig. 7, which is formed so as to be vertically long, power button information 801, automatic-working-mode button information 802, cooling-mode button information 803, heating-mode button information 804, ventilation-mode button information 805, dehumidifying-mode button information 806, set-temperature information 807, set-temperature change button information 808, wind-direction change button information 809, air-volume change button information 810, lock button information 811, and option button information 812 that are components similar to those in the horizontally-long individual air-conditioner management window 80A illustrated in Fig. 4 are displayed so as to be fit in the vertically-long window.

Out of those components, in the wind-direction change button information 809 for changing a wind direction in steps, a first wind-direction area 809-1 and a second wind-direction area 809-2 that are components of the information 809 are arranged and displayed in lateral direction in the same manner as those displayed in the individual air-conditioner management window 80A. Further, in the air-volume change button information 810 for changing an air volume in steps, a first air-volume area 810-1 and a second air-volume area 810-2 that are components of the information 810 are arranged and displayed in lateral direction. Moreover, in the same manner as in a case where the individual air-conditioner management window 80A is displayed, respective parts of individual air-conditioner management windows 81B and 82B for air conditioners having air-conditioner numbers before and after the number of an air conditioner corresponding to the window 80B are displayed on the right side and the left side of the individual air-conditioner management window 80B.

As described above, also in the vertically-long individual air-conditioner management window 80B, a displaying area for graphic information and a displaying area for text information are arranged and displayed in lateral direction in each button information associated with a function for which working condition is changed in steps every time a touch operation is performed. Thus, if displayed information in one of the areas that is operated by a manager is hidden with his finger, the manager can visually perceive a change in displayed information in the other area.

According to the above-described embodiments, in controlling a working condition of an air conditioner on a touch panel, a user can visually perceive a change in the working condition made by his operation also in a case where the working condition is displayed in a position of a control button.

Further, though there has been described an example in which the tablet terminal 50 is used as the facility management apparatus in the above-described embodiments, the controller 20 serving as a central management apparatus may be formed as the facility management apparatus by mounting of a touch panel therein and provision of functions similar to those of the above-described CPU 52 thereto.

In the above-described embodiments, there has been described a case in which an individual air-conditioner management window for a single air conditioner 10 is displayed and a working condition concerning the function of the air conditioner 10 is changed on the window. However, there may be provided a configuration in which an air-conditioner icon corresponding to a plurality of air conditioners is operated to cause an air-conditioner management window to be displayed, and working conditions concerning the functions of the plurality of air conditioners are changed at a time by a similar operation on the window.

Hereinabove, the embodiments of the present invention have been described. However, the embodiments have been proposed as examples and are not intended to limit the scope of the invention.

## Claims

1. A facility management apparatus (20) comprising:
a displayed-information generation unit (522) configured to generate displayed information indicating current working conditions concerning various functions of facility equipment being managed and
a touch panel (51) configured to display the displayed information generated by the displayed-information generation unit (522) and to detect a touch operation on any position in the displayed information that is displayed,
wherein the displayed information is displayed on the touch panel (51), and part of the displayed information is displayed at least in a first area and a second area being arranged and displayed in different forms on the touch panel,
the touch operation is performed on the first area or the second area, and each of the first area and the second area has a lateral width of 12 mm or larger,
**characterized in that**
a specific working condition of the facility equipment can be directly changed by a touch operation on the touch panel (51) displaying the displayed information of working conditions concerning various functions of the facility management system being managed.

2. The facility management apparatus (20) according to claim 1, wherein graphic information indicating the working condition of the facility equipment is displayed in the first area and text information indicating the working condition is displayed in the second area.

3. The facility management apparatus (20) according to claim 1 or 2, wherein the displayed-information generation unit (522) changes the displayed information in the first area and the second area in steps every time a touch operation on the touch panel (51) is detected.

4. The facility management apparatus (20) according to any of claims 1 to 3, wherein the displayed-information generation unit (522) cyclically changes the displayed information in the first area and the second area every time a touch operation on the touch panel (51) is detected.

5. The facility management apparatus (20) according to any of claims 1 to 4, wherein the displayed-information generation unit (522) is configured to generate the displayed information by arrangement in lateral direction of the first area and the second area.

6. The facility management apparatus (20) according to any of claims 1 to 5, further comprising:
a control information generation unit (523) configured to generate control information for changing the working condition of the facility equipment upon detection of a touch operation on the touch panel (51); and
a communication unit (53) configured to transmit the control information generated by the control information generation unit (523) to the facility equipment.

7. A facility management apparatus (20) according to any of claim 1 to 6, **characterized in that**
the displayed-information generation unit (522) is configured to generate displayed information in which a first air-volume area that displays graphic information indicating a current air volume of an air conditioner being managed and a second air-volume area that displays text information indicating the air volume; and
the displayed-information generation unit (522) changes the displayed information in the first air-volume area and the second air-volume area every time a touch operation on the touch panel (51) is detected.

8. A management-window generation method performed by a facility management apparatus (20) that manages facility equipment, comprising:
a displayed-information generating step of generating displayed information indicating working conditions concerning various functions of the facility equipment;
a displaying step of displaying the generated displayed information on a touch panel (51); and
a displayed information changing step of changing the displayed information upon detection of a touch operation on the touch panel (51),
wherein the displayed information is displayed on the touch panel, and part of the displayed information is displayed at least in a first area and a second area being arranged and displayed in different forms on the touch panel,
the touch operation is performed on the first area or the second area, and
each of the first area and the second area has a lateral width of 12 mm or larger,
**characterized in that**
a specific working condition of the facility equipment can be directly changed by a touch operation on the touch panel (51) displaying the displayed information of working conditions concerning various functions of the facility management system being managed.

9. The management-window generation method according to claim 8, wherein in the displayed-information generating step and the displayed-information changing step, graphic information indicating the working condition of the facility equipment is displayed in one of the first area and the second area and text information indicating the working condition is displayed in another area.

## Patentansprüche

1. Anlagenverwaltungsvorrichtung (20), umfassend:
eine Anzeigeinformations-Erzeugungseinheit (522), die so konfiguriert ist, dass sie Anzeigeinformationen erzeugt, die aktuelle Arbeitsbedingungen in Bezug auf verschiedene Funktionen der verwalteten Anlagenausrüstung anzeigen, und
ein Touchpanel (51), das so konfiguriert ist, dass es die von der Anzeigeinformations-Erzeugungseinheit (522) erzeugten Anzeigeinformationen anzeigt und eine Berührungsoperation an einer beliebigen Position in den angezeigten Anzeigeinformationen erkennt,
wobei die Anzeigeinformationen auf dem Touchpanel (51) angezeigt werden und ein Teil der Anzeigeinformationen zumindest in einem ersten Bereich und einem zweiten Bereich angezeigt wird, die in unterschiedlicher Form auf dem Touchpanel angeordnet und angezeigt werden,
die Berührungsoperation auf dem ersten Bereich oder dem zweiten Bereich durchgeführt wird und
der erste Bereich und der zweite Bereich jeweils eine seitliche Breite von 12 mm oder mehr aufweisen,
**dadurch gekennzeichnet, dass**
ein spezifischer Betriebszustand der Anlagenausrüstung durch eine Berührungsoperation auf dem Touchpanel (51), das die angezeigten Informationen über Betriebszustände verschiedener Funktionen des verwalteten Anlagenmanagementsystems anzeigt, direkt geändert werden kann.

2. Anlagenverwaltungsvorrichtung (20) gemäß Anspruch 1, wobei grafische Informationen, die den Betriebszustand der Anlagenausrüstung anzeigen, im ersten Bereich angezeigt werden und Textinformationen, die den Betriebszustand anzeigen, im zweiten Bereich angezeigt werden.

3. Anlagenverwaltungsvorrichtung (20) gemäß Anspruch 1 oder 2, wobei die Anzeigeinformations-Erzeugungseinheit (522) die angezeigten Informationen im ersten Bereich und im zweiten Bereich jedes Mal schrittweise ändert, wenn eine Berührung des Touchpanels (51) erkannt wird.

4. Anlagenverwaltungsvorrichtung (20) gemäß einem der Ansprüche 1 bis 3, wobei die Anzeigeinformations-Erzeugungseinheit (522) die angezeigten Informationen im ersten Bereich und im zweiten Bereich jedes Mal, wenn eine Berührung des Touchpanels (51) erkannt wird, zyklisch ändert.

5. Anlagenverwaltungsvorrichtung (20) gemäß einem der Ansprüche 1 bis 4, wobei die Anzeigeinformations-Erzeugungseinheit (522) dazu ausgebildet ist, die angezeigten Informationen durch Anordnung in seitlicher Richtung des ersten Bereichs und des zweiten Bereichs zu erzeugen.

6. Anlagenverwaltungsvorrichtung (20) gemäß einem der Ansprüche 1 bis 5, die ferner umfasst:
eine Steuersignalerzeugungseinheit (523), ausgebildet zum Erzeugen Steuerinformationen zum Ändern des Betriebszustands der Anlagenausrüstung bei Erkennen einer Berührungsoperation auf dem Touchpanel (51); und
eine Kommunikationseinheit (53), ausgebildet zum Übertragen der Steuerinformation, welche von der Steuersignalerzeugungseinheit (523) erzeugt werden, an die Anlagenausrüstung.

7. Eine Anlagenverwaltungsvorrichtung (20) gemäß einem der Ansprüche 1 bis 6, **dadurch gekennzeichnet, dass**
die Anzeigeinformations-Erzeugungseinheit (522) ausgebildet ist zum Erzeugen von Anzeigeinformationen,
von denen ein erster Luftvolumenbereich, der grafische Informationen anzeigt, die ein aktuelles Luftvolumen einer verwalteten Klimaanlage angeben, und ein zweiter Luftvolumenbereich, der Textinformationen anzeigt, die das Luftvolumen angeben, und
die Anzeigeinformations-Erzeugungseinheit (522) die angezeigten Informationen im ersten Luftvolumenbereich und im zweiten Luftvolumenbereich jedes Mal ändert, wenn eine Berührungsoperation auf dem Touchpanel (51) erkannt wird.

8. Verwaltungsfenster-Erzeugungsverfahren, das von einer Anlagenverwaltungsvorrichtung (20) ausgeführt wird, die Anlagenausrüstung verwaltet, umfassend:
einen Anzeigeinformations-Erzeugungsschritt zum Erzeugen von angezeigten Informationen, die Arbeitsbedingungen in Bezug auf verschiedene Funktionen der Anlagenausrüstung anzeigen;
einen Anzeigeschritt zum Anzeigen der erzeugten angezeigten Informationen auf einem Touchpanel (51); und
einen Schritt zum Ändern der angezeigten Informationen, bei dem die angezeigten Informationen bei Erkennen einer Berührungsoperation auf dem Touchpanel (51) geändert werden,
wobei die angezeigten Informationen auf dem Touchpanel angezeigt werden und ein Teil der angezeigten Informationen zumindest in einem ersten Bereich und einem zweiten Bereich angezeigt wird, die in unterschiedlicher Form auf dem Touchpanel angeordnet und angezeigt werden,
die Berührungsoperation auf dem ersten Bereich oder dem zweiten Bereich durchgeführt wird und
wobei jeder der ersten Bereiche und der zweiten Bereiche eine seitliche Breite von 12 mm oder mehr aufweist,
**dadurch gekennzeichnet, dass**
ein spezifischer Betriebszustand der Anlagenausrüstung durch eine Berührungsoperation auf dem Touchpanel (51), das die angezeigten Informationen über Betriebszustände verschiedener Funktionen des verwalteten Anlagenverwaltungssystems anzeigt, direkt geändert werden kann.

9. Verwaltungsfenster-Erzeugungsverfahren gemäß Anspruch 8, wobei in dem Anzeigeinformations-Erzeugungsschritt und dem Schritt zum Ändern der angezeigten Informationen grafische Informationen, die den Betriebszustand der Anlagenausrüstung anzeigen, in einem von dem ersten Bereich und dem zweiten Bereich angezeigt werden und Textinformationen, die den Betriebszustand anzeigen, in einem anderen Bereich angezeigt werden.

## Revendications

1. Appareil de gestion d'installation (20) comprenant :
une unité de génération d'informations affichées (522) configurée pour générer des informations affichées indiquant des conditions de travail actuelles concernant diverses fonctions d'équipement d'installation qui sont gérées et
un panneau tactile (51) configuré pour afficher les informations affichées générées par l'unité de génération d'informations affichées (522) et pour détecter une opération tactile sur une position quelconque dans les informations affichées qui sont affichées,
dans lequel les informations affichées sont affichées sur le panneau tactile (51), et une partie des informations affichées sont affichées au moins dans une première zone et dans une seconde zone qui sont agencées et affichées sous des formes différentes sur le panneau tactile, l'opération tactile est effectuée sur la première zone ou sur la seconde zone, et
chacune de la première zone et de la seconde zone a une largeur latérale de 12 mm ou plus,
**caractérisé en ce que**
une condition de travail spécifique de l'équipement d'installation peut être changée directement par l'intermédiaire d'une opération tactile sur le panneau tactile (51) affichant les informations affichées de conditions de travail concernant diverses fonctions du système de gestion d'installation qui sont gérées.

2. Appareil de gestion d'installation (20) selon la revendication 1, dans lequel des informations graphiques indiquant la condition de travail de l'équipement d'installation sont affichées dans la première zone et des informations textuelles indiquant la condition de travail sont affichées dans la seconde zone.

3. Appareil de gestion d'installation (20) selon la revendication 1 ou 2, dans lequel l'unité de génération d'informations affichées (522) change les informations affichées dans la première zone et dans la seconde zone par paliers chaque fois qu'une opération tactile sur le panneau tactile (51) est détectée.

4. Appareil de gestion d'installation (20) selon l'une quelconque des revendications 1 à 3, dans lequel l'unité de génération d'informations affichées (522) change de manière cyclique les informations affichées dans la première zone et dans la seconde zone chaque fois qu'une opération tactile sur le panneau tactile (51) est détectée.

5. Appareil de gestion d'installation (20) selon l'une quelconque des revendications 1 à 4, dans lequel l'unité de génération d'informations affichées (522) est configurée pour générer les informations affichées au moyen d'un agencement en direction latérale de la première zone et de la seconde zone.

6. Appareil de gestion d'installation (20) selon l'une quelconque des revendications 1 à 5, comprenant en outre :
une unité de génération d'informations de commande (523) configurées pour générer des informations de commande destinées à changer la condition de travail de l'équipement d'installation lors d'une détection d'une opération tactile sur le panneau tactile (51) ; et
une unité de communication (53) configurée pour transmettre les informations de commande générées par l'unité de génération d'informations de commande (523) à l'équipement d'installation.

7. Appareil de gestion d'installation (20) selon l'une quelconque des revendications 1 à 6, **caractérisé en ce que**
une unité de génération d'informations affichées (522) est configurée pour générer des informations affichées dans lesquelles une première zone de volume d'air qui affiche des informations graphiques indique un volume d'air actuel d'un appareil de conditionnement d'air qui est géré et une seconde zone de volume d'air qui affiche des informations textuelles indique le volume d'air ; et
l'unité de génération d'informations affichées (522) change les informations affichées dans la première zone de volume d'air et dans la seconde zone de volume d'air chaque fois qu'une opération tactile sur le panneau tactile (51) est détectée.

8. Procédé de génération de fenêtre de gestion effectué par un appareil de gestion d'installation (20) qui gère un équipement d'installation, comprenant :
une étape de génération d'informations affichées consistant à générer des informations affichées indiquant des conditions de travail concernant diverses fonctions de l'équipement d'installation ;
une étape d'affichage consistant à afficher les informations affichées générées sur un écran tactile (51) ; et
une étape de changement d'informations affichées consistant à changer les informations affichées lors d'une détection d'une opération tactile sur le panneau tactile (51),
les informations affichées sont affichées sur le panneau tactile, et une partie des informations affichées sont affichées au moins dans une première zone et dans une seconde zone qui sont agencées et affichées sous des formes différentes sur le panneau tactile,
l'opération tactile est effectuée sur la première zone ou sur la seconde zone, et
chacune de la première zone et de la seconde zone a une largeur latérale de 12 mm ou plus,
**caractérisé en ce que**
une condition de travail spécifique de l'équipement d'installation peut être changée directement par l'intermédiaire d'une opération tactile sur le panneau tactile (51) affichant les informations affichées de conditions de travail concernant diverses fonctions du système de gestion d'installation qui sont gérées.

9. Procédé de génération de fenêtre de gestion selon la revendication 8, dans lequel, dans l'étape de génération d'informations affichées et dans l'étape de changement d'informations affichées, des informations graphiques indiquant la condition de travail de l'équipement d'installation sont affichées dans l'une de la première zone et de la seconde zone et des informations textuelles indiquant la condition de travail sont affichées dans une autre zone.
